# FASCICULE DE BREVET EUROPEEN

(11) **EP 0 526 338 B1**
(45) Date de publication et mention de la délivrance du brevet: **11.01.1995**
(21) Numéro de dépôt: 92402194.2
(22) Date de dépôt: 30.07.1992
(51) Int. Cl.: B62D 25/14

(54) **Planche de bord perfectionnée**
Armaturenbrett
Dashboard

(30) Priorité: 31.07.1991 FR 9109756
(43) Date de publication de la demande: 03.02.1993
(73) Titulaire: ECIA - EQUIPEMENTS ET COMPOSANTS POUR L'INDUSTRIE AUTOMOBILE, F-25400 Audincourt (FR)
(72) Inventeur: Saint-Dizier, Serge, F-25700 Valentigney (FR); Hallonet, Jacques, F-25230 Seloncourt (FR)
(74) Mandataire: Polus, Camille

(56) Documents cités:
- GB-A- 1 431 441
- GB-A- 2 059 330

## Description

La présente invention concerne l'industrie automobile et a plus particulièrement pour objet une planche de bord à joint d'accostage incorporé pour pare-brise telle que défine dans le préambule de le revendication 1.

Les planches de bord traditionnelles et spécialement celles destinées à des véhicules dits "haut de gamme", sont constituées essentiellement d'une armature avec un revêtement entre lesquels est disposé un garnissage sous-jacent. L'armature, rigide en métal ou en matériaux synthétiques, reçoit le revêtement extérieur, généralement en PVC qui lui donne sa présentation et son aspect en particulier au toucher et à la vue. Entre ce revêtement et cette armature, on injecte un matériau synthétique qui forme une mousse qui constitue le garnissage sous-jacent. Cette mousse, souple ou relativement rigide participe à la sécurité des occupants du véhicule.

Une telle planche de bord est limitée essentiellement au contour de son armature et le raccordement aux autres parties notamment de la coque ou structure du véhicule, est obtenu par exemple à l'aide de joints rapportés. Tel est le cas du raccordement d'une planche de bord avec un pare-brise.

Un tel type de raccordement est long, délicat et source de difficultés. En effet, d'une part techniquement, les risques de rupture ne sont pas négligeables car des matériaux différents en particulier relativement "tendres" sont utilisés pour confectionner les pièces d'accostage et, d'autre part, économiquement, il est coûteux de fabriquer, gérer et assembler ces pièces d'accostage supplémentaires.

Le but de l'invention est de remédier à ce type de difficultés à l'aide d'une planche de bord perfectionnée à joint de pare-brise incorporé.

L'invention a pour objet une planche de bord à joint de pare-brise incorporé qui est constituée, entre autres, d'une armature relativement rigide et d'un coussin fait d'un rembourrage disposé entre cette armature et une housse délimitée par au moins une demi-coquille extérieure. Cette planche de bord est remarquable en ce que du côté de la rive de la planche de bord qui recevra un pare-brise, cette demi-coquille extérieure se prolonge par une lèvre, en ce que la bordure de cette armature reçoit sur une de ses faces une contre-lèvre à l'aplomb de la lèvre pour former avec celle-ci une poche et en ce que cette poche est emplie d'un rembourrage pour constituer un joint à pare-brise.

L'invention ressortira de la lecture de la description et des revendications qui suivent ainsi que de l'examen du dessin annexé, donné seulement à titre d'exemple, où:
- la Figure 1 est une section transversale d'un mode de réalisation d'une planche de bord perfectionnée selon l'invention en cours de fabrication; et
- la Figure 2 est une vue analogue d'un autre mode de réalisation.

Dans ce qui suit, on utilise toujours un même numéro de référence pour identifier un élément homologue quel que soit le mode de réalisation ou sa variante d'exécution.

Comme on le voit, une planche de bord P présente une rive R destinée à prendre appui à l'aide d'un joint J sur un pare-brise non représenté. Une telle planche de bord est fabriquée par exemple à l'aide d'un moule M dont seule une partie est illustrée schématiquement.

On notera que cette planche de bord comprend une armature 10 avec une face interne 101 et une face externe 102, qui présente une bordure 103. S'il y a lieu cette armature 10, relativement rigide, est transpercée d'ajours 11 ou analogues dont un seul est dessiné.

A cette armature 10 est associé un coussin 20 fait d'un rembourrage 21 contenu dans une housse 22. La housse 22 comprend au moins une demi-coquille 221 extérieure et, s'il y a lieu, une demi-coquille 222 intérieure appliquée en contact intime, et au besoin collée, contre la face interne 101 de l'armature 10.

Comme le montrent les figures du dessin, la demi-coquille extérieure 221 se prolonge par une lèvre 31 du côté de la rive de la planche de bord qui "accostera" un pare-brise, c'est-à-dire du côté de la bordure 103 de l'armature 10.

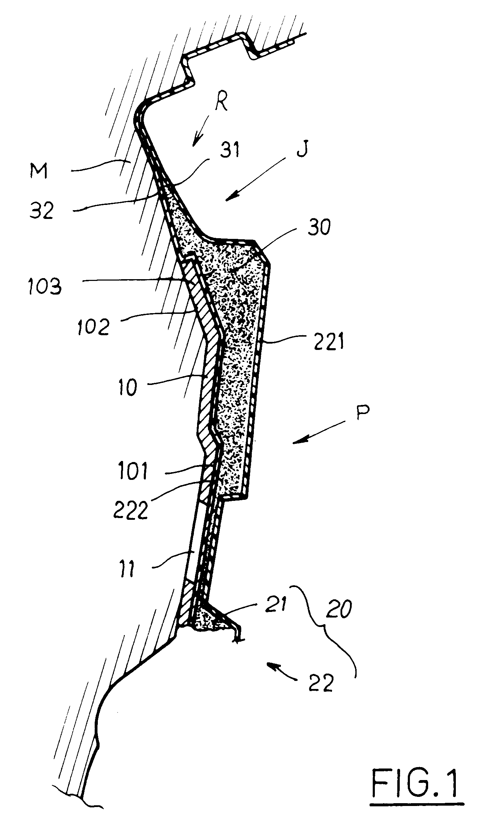

Cette bordure 103 de l'armature 10 reçoit aussi, sur l'une de ses faces, une contre-lèvre 32 à l'aplomb de la lèvre 31 pour former avec celle-ci une poche 30. Cette contre-lèvre 32 est appliquée contre la face interne 101 de l'armature 10 qui est en regard de la demi-coquille extérieure 221 ou bien est d'un seul tenant avec la demi-coquille intérieure 222 au contact de l'armature 10 et délimitant la housse avec la demi-coquille extérieure 221, comme illustré sur la Figure 1.

Comme on peut l'observer, cette poche 30 est emplie d'un rembourrage pour constituer le joint à pare-brise avec ces lèvre et contre-lèvre.

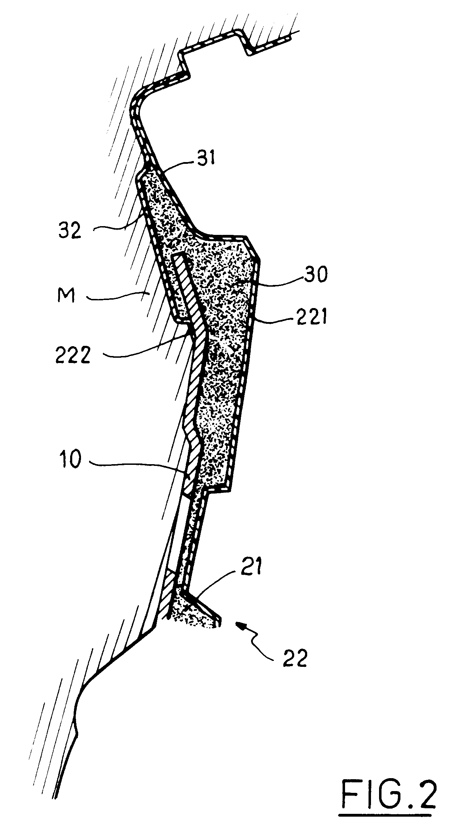

Cette contre-lèvre 32 peut être aussi appliquée contre la face externe 102 de l'armature 10 qui est à l'opposé de celle 101 en regard de la demi-coquille extérieure 221, comme illustré sur la Figure 2.

Comme on peut l'observer, la poche 30 est contiguë de la housse 22 et, de préférence, communique avec celle-ci.

Pour fabriquer une telle planche de bord perfectionnée selon l'invention, on peut utiliser une technique comme et des matériaux classiques.

Après fabrication d'une telle planche de bord, les marges périphériques des demi-coquilles sont éliminées, arasées car elles ne sont utilisées que pour assurer l'étanchéité au cours de l'opération de "moussage" qui permet d'obtenir le rembourrage et le joint.

On comprend tout l'intérêt de l'invention puisque la planche de bord comprend un joint à pare-brise incorporé qui est relativement peu fragile et qui contribue à la continuité de la configuration de l'habitacle.

## Revendications

1. Planche de bord à joint de pare-brise incorporé constituée, entre autres, d'une armature (10) relativement rigide et d'un coussin (20) fait d'un rembourrage (21) disposé entre cette armature (10) et une housse (22) délimitée par au moins une demi-coquille (221) extérieure, caractérisée en ce que, du côté de la rive de la planche de bord qui recevra un pare-brise, cette demi-coquille extérieure (221) se prolonge par une lèvre (31), en ce que la bordure (103) de cette armature (10) reçoit sur une de ses faces (101, 102) une contre-lèvre (32) à l'aplomb de la lèvre (31) pour former avec celle-ci une poche (30) et en ce que cette poche (30) est emplie d'un rembourrage pour constituer un joint à pare-brise.

2. Planche de bord selon la revendication 1, caractérisée en ce que cette poche (30) est contiguë à la housse (22).

3. Planche de bord selon la revendication 2, caractérisée en ce que cette poche (30) communique avec la housse (22).

4. Planche de bord selon l'une quelconque des revendications 1 à 3, caractérisée en ce que cette contre-lèvre (32) est appliquée contre la face interne (101) de l'armature (10) qui est en regard de la demi-coquille extérieure (221).

5. Planche de bord selon la revendication 4, caractérisée en ce que cette contre-lèvre (32) est d'un seul tenant avec une demi-coquille intérieure (222) au contact de l'armature (10) et délimitant la housse (22) avec la demi-coquille extérieure (221).

6. Planche de bord selon l'une quelconque des revendications 1 à 3, caractérisée en ce que cette contre-lèvre (32) est appliquée contre la face externe (102) de l'armature (10) qui est à l'opposé de celle (101) en regard de la demi-coquille extérieure (221).

## Claims

1. Dashboard comprising an incorporated windscreen gasket, constituted, inter alia, by a relatively rigid reinforcement (10) and by a cushion (20) made from padding (21) disposed between this reinforcement (10) and a cover (22) defined by at least one external half-shell (221), characterised in that, on the side of the edge of the dashboard which will receive a windscreen, this external half-shell (221) is extended by a lip (31), in that the border (103) of this reinforcement (10) receives on one of its sides (101, 102) a counter-lip (32) flush with the lip (31) in order to form with the latter, a pocket (30) and in that this pocket (30) is filled with padding in order to constitute a windscreen seal.

2. Dashboard according to Claim 1, characterised in that this pocket (30) is adjacent to the cover (22).

3. Dashboard according to Claim 2, characterised in that this pocket (30) communicates with the cover (22).

4. Dashboard according to one of Claims 1 to 3, characterised in that this counter-lip (32) is pressed against the inner side (101) of the reinforcement (10) which is opposite the external half-shell (221).

5. Dashboard according to Claim 4, characterised in that this counter-lip (32) is in one piece with an internal half-shell (222) in contact with the reinforcement (10) and defining the cover (22) with the external half-shell (221).

6. Dashboard according to one of Claims 1 to 3, characterised in that this counter-lip (32) is pressed against the outer side (102) of the reinforcement (10) which is opposite the face (101) facing the external half-shell (221).

## Patentansprüche

1. Armaturenbrett mit integrierter Windschutzscheibendichtung, die unter anderem gebildet wird durch eine relativ starre Versteifung (10) und ein Kissen (20), das aus einer Füllung (21) hergestellt ist, das zwischen dieser Versteifung (10) und einem Bezug (22) angeordnet ist, der durch wenigstens eine äußere Halbschale (221) begrenzt wird, dadurch gekennzeichnet, daß auf der Seite des Saumes des Armaturenbretts, die eine Windschutzscheibe aufnehmen soll, diese äußere Halbschale (221) sich in einer Lippe (31) fortsetzt, daß der Rand (103) der Versteifung (10) auf einer seiner Oberflächen (101, 102) eine zu der Lippe (31) beabstandete Gegenlippe (32) trägt, um mit dieser eine Tasche (30) zu bilden, und daµ diese Tasche (30) mit einer Füllung zur Bildung einer Windschutzscheibendichtung gefüllt ist.

2. Armaturenbrett nach Anspruch 1, dadurch gekennzeichnet, daß diese Tasche (30) an den Bezug (22) angrenzt.

3. Armaturenbrett nach Anspruch 2, dadurch gekennzeichnet, daß diese Tasche (30) mit dem Bezug (22) in Verbindung steht.

4. Armaturenbrett nach einem der Ansprüche 1 bis 3, dadurch gekennzeichnet, daß die Gegenlippe (32) an der Innenfläche (101) der Versteifung (10) anliegt, die der äußeren Halbschale (221) zugewandt ist.

5. Armaturenbrett nach Anspruch 4, dadurch gekennzeichnet, daß die Gegenlippe (32) in einem Stück mit einer inneren Halbschale (222) ausgebildet ist, die die Versteifung (10) beehrt und zusammen mit der äußeren Halbschale (221) den Bezug (22) begrenzt.

6. Armaturenbrett nach einem der Ansprüche 1 bis 3, dadurch gekennzeichnet, daß die Gegenlippe (32) an der Außenfläche (102) der Versteifung (10) anliegt, die der der äußeren Halbschale (221) zugewandten (101) entgegengesetzt ist.
